# EUROPEAN PATENT APPLICATION

(11) **EP 4 209 977 A1**
(43) Date of publication of application: **12.07.2023**
(21) Application number: 22198573.2
(22) Date of filing: 29.09.2022
(51) Int. Cl.: G06Q 10/0631, G06Q 10/1093

(54) **INFORMATION PROCESSING APPARATUS, PROGRAM, AND METHOD FOR PROCESSING INFORMATION**

(30) Priority: 05.01.2022 JP 2022000438
(71) Applicant: Fujifilm Business Innovation Corp., Tokyo 107-0052 (JP)
(72) Inventor: KICHIKAWA, Tomohiro, Yokohama (JP)
(74) Representative: Meissner Bolte Partnerschaft mbB

(57) **Abstract**

An information processing apparatus includes a processor configured to: display a process reception screen in which plural processes included in a workflow are displayed in order of execution and that receives selection of at least one of the plural displayed processes; receive, for the at least one process received by the process reception screen, disclosure information indicating whether to disclose workflow-related information relating to the workflow; and set whether to disclose the workflow-related information in accordance with the received disclosure information.

## Description

### Background

### (i) Technical Field

The present disclosure relates to an information processing apparatus, a program, and a method for processing information.

### (ii) Related Art

Japanese Unexamined Patent Application Publication No. 2007-108827 discloses a program for providing a mechanism for providing electronic information sharing spaces appropriate for having conversations for carrying out activities in a workflow process.

This program is a program for causing a computer system to function as a workflow system that cooperates with an information sharing system including a plurality of information sharing spaces whose scopes of disclosure are different from one another. In the program, specification of a required scope of communication with regard to an activity in a workflow process is received from a user.

In the program, a recommended disclosure level of a space of communication for the activity is then obtained on the basis of a combination of the specified scope of communication and a scope within which information may be disclosed for the activity, an information sharing space whose scope of disclosure corresponds to the obtained recommended disclosure level is found as a recommended space, and the user is notified of the found recommended space.

Japanese Unexamined Patent Application Publication No. 2006-243960 discloses an information sharing system for efficiently sharing information registered for a certain operation purpose between user groups relating to the information.

The information sharing system includes storage means for storing information to be shared between user groups and task selection means for selecting an output-type task for storing input information in the storage means while setting a scope of disclosure for the information, an input/output-type task for presenting information stored in the storage means and storing input information relating to the stored information while setting a scope of disclosure for the information, or an input-type task for presenting information stored in the storage means.

The information sharing system also includes group assignment means for assigning, to a task selected by the task selection means, a user group that is to perform the task and setting means for setting, if the selected task is an input/output-type task or an output-type task, a user group for the selected task as the scope of disclosure. The information sharing system also includes information selection means for selecting, if the selected task is an input-type task or an input/output-type task, information to be presented by the selected task from information that is stored in the storage means by output-type tasks and input/output-type tasks and whose scopes of disclosure include the user group assigned to the selected task.

### Summary

With the techniques disclosed in Japanese Unexamined Patent Application Publication No. 2007-108827 and Japanese Unexamined Patent Application Publication No. 2006-243960, however, it is difficult to understand a position of each of processes included in a target workflow in relation to the overall workflow. A user undesirably needs to determine whether to disclose information relating to the workflow without understanding the position of each of the processes in relation to the overall workflow.

Accordingly, it is an object of the present disclosure to provide an information processing apparatus, a program, and a method for processing information capable of enabling a user to determine whether to disclose information relating to a workflow while understanding a position of each of processes in relation to the overall workflow.

According to a first aspect of the present disclosure, there is provided an information processing apparatus including a processor configured to display a process reception screen in which a plurality of processes included in a workflow are displayed in order of execution and that receives selection of at least one of the plurality of displayed processes, receive, for the at least one process received by the process reception screen, disclosure information indicating whether to disclose workflow-related information relating to the workflow, and set whether to disclose the workflow-related information in accordance with the received disclosure information.

According to a second aspect of the present disclosure, there is provided the information processing apparatus according to the first aspect, in which the processor is configured to display, after the process reception screen receives the at least one process, a person reception screen in which at least one person involved in the at least one received process is displayed and that receives at least one of the displayed at least one person and in which the processor is configured to receive the disclosure information for the at least one person received by the person reception screen.

According to a third aspect of the present disclosure, there is provided the information processing apparatus according to the first or second aspect, in which the workflow-related information includes at least one of information indicating what to be executed in the workflow and information indicating a message relating to the plurality of processes included in the workflow.

According to a fourth aspect of the present disclosure, there is provided the information processing apparatus according to any of the first to third aspects, in which the processor is configured to display, in the process reception screen, icons individually indicating the plurality of processes in order of execution of the corresponding processes.

According to a fifth aspect of the present disclosure, there is provided the information processing apparatus according to the fourth aspect, in which the processor is configured to display the icons in different modes in accordance with whether to disclose the workflow-related information.

According to a sixth aspect of the present disclosure, there is provided the information processing apparatus according to the fifth aspect, in which the processor is configured to display the icons in different modes in accordance with whether the workflow-related information is to be disclosed to all persons involved, not to be disclosed to any of the persons involved, to be disclosed to part of the persons involved, or to be also disclosed to additional persons.

According to a seventh aspect of the present disclosure, there is provided the information processing apparatus according to the sixth aspect, in which the processor is configured to highlight the icons more strongly as the workflow-related information is to be disclosed more widely.

According to an eighth aspect of the present disclosure, there is provided the information processing apparatus according to any of the first to seventh aspects, in which the processor is configured to assume, if a position on a display screen at which a predetermined first operation has been performed is detected, that a display target at the position at which the first operation has been performed on the display screen has been selected and in which the processor is configured to assume, if a position at which a second operation, which is different from the first operation, has been performed is detected, that the disclosure information regarding a display target at the position at which the second operation has been performed on the display screen has been selected.

According to a ninth aspect of the present disclosure, there is provided the information processing apparatus according to the second aspect, in which the processor is configured to display, in a case where the plurality of processes are displayed in the process reception screen in a line and there are a plurality of persons involved in the at least one received process, the plurality of persons in the person reception screen in a direction intersecting with a direction in which the plurality of processes are arranged in the process reception screen.

According to a tenth aspect of the present disclosure, there is provided the information processing apparatus according to any of the first to ninth aspects, in which the processor is configured to receive selection of an additional person to whom the workflow-related information is to be disclosed.

According to an eleventh aspect of the present disclosure, there is provided the information processing apparatus according to the tenth aspect, in which the processor is configured to display, if the additional person is received and each of the plurality of processes is displayed as an individual icon, a number of additional persons received on one of the icons indicating a corresponding one of the plurality of processes.

According to a twelfth aspect of the present disclosure, there is provided a program causing a computer to execute a process for processing information, the process including displaying a process reception screen in which a plurality of processes included in a workflow are displayed in order of execution and that receives selection of at least one of the plurality of displayed processes, receiving, for the at least one process received by the process reception screen, disclosure information indicating whether to disclose workflow-related information relating to the workflow, and setting whether to disclose the workflow-related information in accordance with the received disclosure information.

According to a thirteenth aspect of the present disclosure, there is provided a method for processing information, the method including displaying a process reception screen in which a plurality of processes included in a workflow are displayed in order of execution and that receives selection of at least one of the plurality of displayed processes, receiving, for the at least one process received by the process reception screen, disclosure information indicating whether to disclose workflow-related information relating to the workflow, and setting whether to disclose the workflow-related information in accordance with the received disclosure information.

According to the first, twelfth, or thirteenth aspect of the present disclosure, a position of each of processes in relation to an overall workflow can be understood, and whether to disclose information regarding the workflow can be selected.

According to the second aspect of the present disclosure, whether to disclose the information regarding the workflow to a person involved in the workflow can be selected.

According to the third aspect of the present disclosure, whether to disclose applied information can be selected.

According to the fourth aspect of the present disclosure, a plurality of processes included in a workflow can be understood more easily than when icons are not arranged in order of execution of the processes.

According to the fifth aspect of the present disclosure, a disclosure state of workflow-related information can be understood more easily than when icons are displayed in the same mode regardless of whether to disclose the workflow-related information.

According to the sixth aspect of the present disclosure, a disclosure state of workflow-related information can be understood in more detail than when icons are displayed in the same mode for all of the four cases described in the sixth aspect.

According to a seventh aspect of the present disclosure, how widely workflow-related information is to be disclosed can be understood more easily than when the highlighting according to the seventh aspect is not performed.

According to the eighth aspect of the present disclosure, a display target can be selected more easily than when the first operation is not performed, and disclosure information regarding a display target can be selected more easily than when the second operation is not performed.

According to the ninth aspect of the present disclosure, visibility of persons involved can be improved compared to when the persons are arranged in a direction parallel to a direction in which processes are arranged.

According to the tenth aspect of the present disclosure, workflow-related information can be disclosed more widely than when an additional person is not selected.

According to the eleventh aspect of the present disclosure, the number of additional persons can be understood more easily than when the number of additional persons is not displayed.

### Brief Description of the Drawings

An exemplary embodiment of the present disclosure will be described in detail based on the following figures, wherein:
Fig. 1 is a block diagram illustrating an example of the configuration of an information processing system according to an exemplary embodiment;
Fig. 2 is a block diagram illustrating an example of the hardware configuration of terminal apparatuses according to the exemplary embodiment;
Fig. 3 is a block diagram illustrating an example of the functional configuration of the terminal apparatuses according to the exemplary embodiment;
Fig. 4 is a schematic diagram illustrating an example of display modes of an icon for different disclosure states of workflow-related information according to the exemplary embodiment;
Fig. 5 is a schematic diagram illustrating an example of the configuration of a workflow management database according to the exemplary embodiment;
Fig. 6 is a flowchart illustrating an example of information processing according to the exemplary embodiment;
Fig. 7 is a diagram illustrating a message edit screen according to the exemplary embodiment;
Fig. 8 is a diagram illustrating an example of a display mode of a process reception part according to the exemplary embodiment;
Fig. 9 is a diagram illustrating another example of the display mode of the process reception part according to the exemplary embodiment;
Fig. 10 is a diagram illustrating another example of the display mode of the process reception part according to the exemplary embodiment;
Fig. 11 is a diagram illustrating an example of display modes of the process reception part and a person reception part according to the exemplary embodiment;
Fig. 12 is a diagram illustrating an example of a display mode of an additional person search screen according to the exemplary embodiment;
Fig. 13 is a diagram illustrating another example of the display modes of the process reception part and the person reception part according to the exemplary embodiment;
Fig. 14 is a diagram illustrating another example of the display modes of the process reception part and the person reception part according to the exemplary embodiment;
Fig. 15 is a diagram illustrating another example of the display mode of the process reception part according to the exemplary embodiment;
Fig. 16 is a diagram illustrating another example of the display modes of the process reception part and the person reception part according to the exemplary embodiment;
Fig. 17 is a diagram illustrating another example of the display modes of the process reception part and the person reception part according to the exemplary embodiment;
Fig. 18 is a diagram illustrating another example of the display mode of the process reception part according to the exemplary embodiment;
Fig. 19 is a schematic diagram illustrating how the configuration of the workflow management database changes according to the exemplary embodiment;
Fig. 20 is a diagram illustrating an example of a display mode of workflow-related information according to the exemplary embodiment;
Fig. 21 is a diagram illustrating an example of a display mode of a process reception part according to a modification of the exemplary embodiment;
Fig. 22 is a diagram illustrating the example of the display mode of the process reception part according to the modification of the exemplary embodiment;
Fig. 23 is a diagram illustrating an example of a selection method used for the process reception part according to the modification of the exemplary embodiment;
Fig. 24A is a diagram illustrating an example of a pattern of how workflow-related information is to be disclosed according to the modification of the exemplary embodiment;
Fig. 24B is a diagram illustrating another example of a pattern of how workflow-related information is to be disclosed according to the modification of the exemplary embodiment;
Fig. 24C is a diagram illustrating another example of a pattern of how workflow-related information is to be disclosed according to the modification of the exemplary embodiment;
Fig. 25 is a diagram illustrating another example of the display mode of the process reception part according to the modification of the exemplary embodiment; and
Fig. 26 is a diagram illustrating another example of the display mode of the process reception part according to the modification of the exemplary embodiment.

### Detailed Description

An exemplary embodiment of the present disclosure will be described in detail hereinafter with reference to the drawings. In the present exemplary embodiment, each of a plurality of processes included in a workflow in the present disclosure will be referred to as a "task". A "workflow" according to the present exemplary embodiment refers to a "procedure or a set of operations linked to one another in accordance with operations performed by users". A specific example of the "operations performed by users" is operations performed on at least a folder or document information.

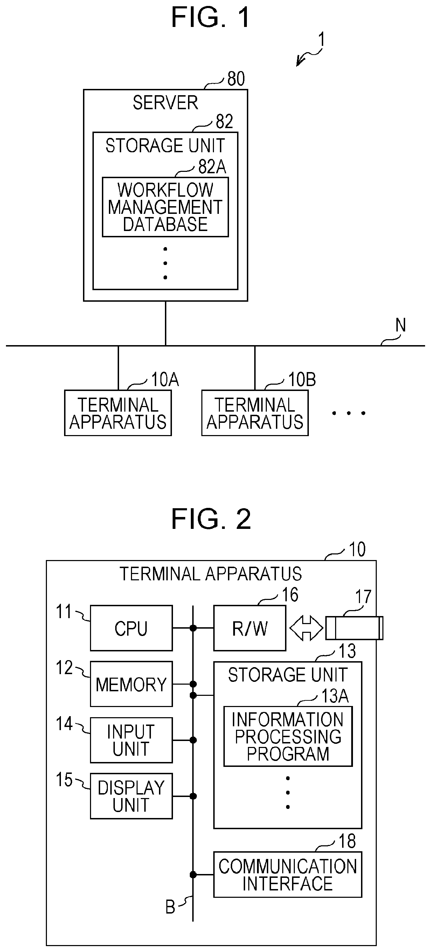

First, the configuration of an information processing system 1 according to the present exemplary embodiment will be described with reference to Fig. 1. Fig. 1 is a block diagram illustrating an example of the configuration of the information processing system 1 according to the present exemplary embodiment.

As illustrated in Fig. 1, the information processing system 1 according to the present exemplary embodiment includes terminal apparatuses 10A, 10B, and so on, which are information processing apparatuses in the present disclosure, and a server 80. The terminal apparatuses 10A, 10B, and so on will be simply referred to as "terminal apparatuses 10" hereinafter when not distinguished from one another.

Examples of the terminal apparatuses 10 and the server 80 include various stationary computers such as personal computers and server computers. The terminal apparatuses 10, however, are not limited to this, and may be various mobile information processing apparatuses such as smartphones, tablet terminals, or mobile information terminals, instead.

The terminal apparatuses 10 and the server 80 are connected to each other over a network N and can communicate with each other over the network N. Although the network N is a public communication network such as the Internet or a telephone network in the present exemplary embodiment, the network N is not limited to this. For example, the network N may be an inhouse communication network such as a local area network (LAN) or a wide area network (WAN), or a combination of an inhouse communication network and a public communication network. Although the network N is a wired communication network in the present exemplary embodiment, the network N is not limited to this. A wireless communication network or a combination of a wired communication network and a wireless communication network may be used, instead.

As illustrated in Fig. 1, the server 80 according to the present exemplary embodiment includes a storage unit 82, which stores a workflow management database 82A. The storage unit 82 is implemented as a hard disk drive (HDD), a solid-state drive (SSD), a flash memory, or the like. Details of the workflow management database 82A will be described later.

The terminal apparatuses 10 according to the present exemplary embodiment, on the other hand, are used by persons who perform tasks included in a workflow (hereinafter referred to as "performers").

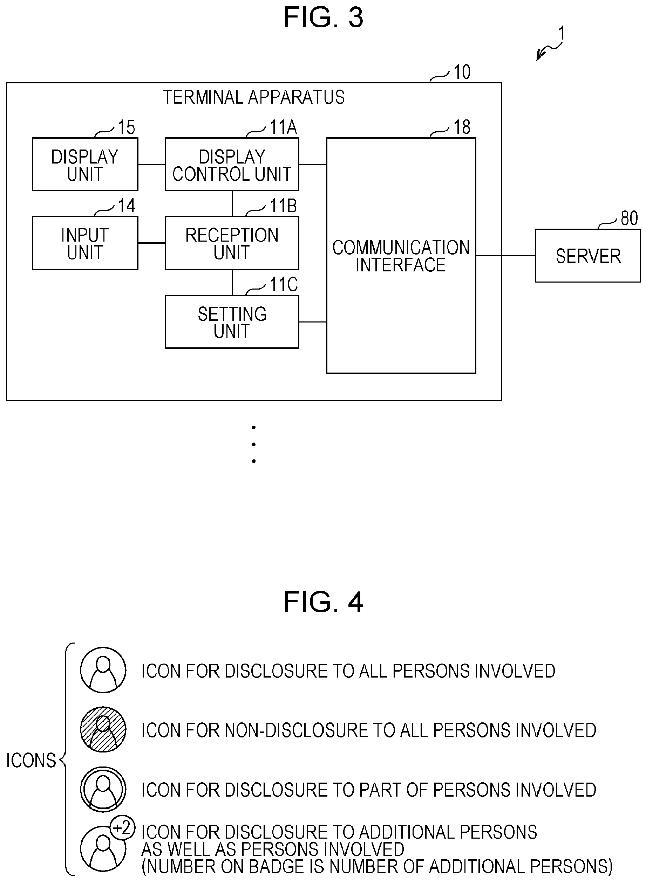

Next, the configuration of the terminal apparatuses 10 according to the present exemplary embodiment will be described with reference to Figs. 2 and 3. Fig. 2 is a block diagram illustrating an example of the hardware configuration of the terminal apparatuses 10 according to the present exemplary embodiment. Fig. 3 is a block diagram illustrating an example of the functional configuration of the terminal apparatuses 10 according to the present exemplary embodiment.

As illustrated in Fig. 2, the terminal apparatuses 10 according to the present exemplary embodiment each include a central processing unit (CPU) 11 as a processor, a memory 12 as a temporary storage area, a nonvolatile storage unit 13, an input unit 14 such as a keyboard and a mouse, a display unit 15 such as a liquid crystal display, a medium reading/writing device (R/W) 16, and a communication interface 18. The CPU 11, the memory 12, the storage unit 13, the input unit 14, the display unit 15, the medium reading/writing device 16, and the communication interface 18 are connected to one another through a bus B. The medium reading/writing device 16 reads information written in a storage medium 17 and writes information to the storage medium 17.

The storage unit 13 according to the present exemplary embodiment is implemented as an HDD, an SSD, a flash memory, or the like. The storage unit 13 as a storage medium stores an information processing program 13A.

The information processing program 13A is stored (installed) in the storage unit 13 when the storage medium 17 in which the information processing program 13A is written is connected to the medium reading/writing device 16 and the medium reading/writing device 16 reads the information processing program 13A from the storage medium 17. The CPU 11 reads the information processing program 13A from the storage unit 13 as necessary, loads the information processing program 13A into the memory 12, and sequentially performs processes included in the information processing program 13A.

Next, the functional configuration of the terminal apparatuses 10 according to the present exemplary embodiment will be described with reference to Fig. 3. As illustrated in Fig. 3, the terminal apparatuses 10 each include a display control unit 11A, a reception unit 11B, and a setting unit 11C. The CPU 11 of each of the terminal apparatuses 10 functions as the display control unit 11A, the reception unit 11B, and the setting unit 11C by executing the information processing program 13A.

The display control unit 11A according to the present exemplary embodiment displays a process reception screen in which tasks included in a workflow are displayed in order of execution and that receives selection of at least one of the displayed tasks. The reception unit 11B according to the present exemplary embodiment receives, for the task selected in the process reception screen, disclosure information indicating whether to disclose workflow-related information relating to the workflow. The setting unit 11C according to the present exemplary embodiment then sets whether to disclose the workflow-related information corresponding to the disclosure information received by the reception unit 11B.

The display control unit 11A according to the present exemplary embodiment also displays, after at least one of tasks is selected on the process reception screen, a person reception screen in which persons involved in the selected task are displayed and that receives selection of at least one of the displayed persons. The reception unit 11B according to the present exemplary embodiment then receives disclosure information for the person selected in the person reception screen.

Although a case where workflow-related information includes both information (hereinafter referred to as "execution information") indicating what to be executed in a workflow and information (hereinafter referred to as "message information") indicating messages relating to tasks included in the workflow will be described in the present exemplary embodiment, information included in workflow-related information is not limited to this. For example, workflow-related information may include only execution information or message information, instead.

The display control unit 11A according to the present exemplary embodiment displays, in the process reception screen, icons individually indicating the tasks in order of execution of the corresponding tasks.

Here, the display control unit 11A according to the present exemplary embodiment displays icons in different modes in accordance with whether to disclose workflow-related information. Furthermore, the display control unit 11A according to the present exemplary embodiment displays icons in different modes in accordance with whether workflow-related information is to be disclosed to all persons involved, not to be disclosed to any of the persons involved, to be disclosed to part of the persons involved, or to be also disclosed to additional persons. Not all of these four options, however, need to be used. For example, a combination of two or three of these four options may be used to display icons in different modes, instead. Fig. 4 is a schematic diagram illustrating an example of display modes of an icon for different disclosure states of workflow-related information according to the present exemplary embodiment.

As illustrated in Fig. 4, in the present exemplary embodiment, a default icon is used when the workflow-related information is to be disclosed to all the persons involved, and a hatched icon is used when the workflow-related information is not to be disclosed to all the persons involved. In addition, as illustrated in Fig. 4, in the present exemplary embodiment, an icon with a circle inside is used when the workflow-related information is to be disclosed to part of the persons involved, and an icon with a badge indicating the number of additional persons is used when the workflow-related information is to be also disclosed to additional persons. Display modes of an icon according to different disclosure states of workflow-related information, however, are not limited to these. For example, display modes of an icon according to different disclosure states of workflow-related information may be one or a combination of visually different display modes, such as display colors, sizes, and outline shapes of an icon, instead.

In addition, when a position on a display screen at which a predetermined first operation has been performed is detected, the reception unit 11B according to the present exemplary embodiment assumes that a display target at the position on the display screen has been selected. In addition, when a position on the display screen at which a second operation, which is different from the first operation, has been performed is detected, the reception unit 11B according to the present exemplary embodiment assumes that disclosure information relating to a display target at the position on the display screen has been selected.

In the present exemplary embodiment, the first operation is keeping a mouse pointer, which moves in accordance with movement of the mouse of the input unit 14, at one position for a predetermined period of time (two seconds in the present exemplary embodiment) (hereinafter referred to as a "mouse-over operation"). In addition, in the present exemplary embodiment, the second operation is pressing a button provided for the mouse with the mouse stopped (hereinafter referred to as a "mouse-click operation"). It is needless to say, however, that the first and second operations are not limited to these.

When tasks are displayed in a line in the process reception screen and a plurality of persons are involved in the tasks, the display control unit 11A according to the present exemplary embodiment displays the persons in the person reception screen in a direction intersecting with (perpendicular to, in the present exemplary embodiment) a direction in which the tasks are displayed in the process reception screen.

The reception unit 11B according to the present exemplary embodiment receives selection of additional persons to whom workflow-related information is to be disclosed. When selection of additional persons has been received and the tasks are to be displayed as individual icons, the display control unit 11A according to the present exemplary embodiment displays, on the icons indicating the corresponding tasks, the number of additional persons selected. More specifically, the number of additional persons selected is displayed as badges in the present exemplary embodiment.

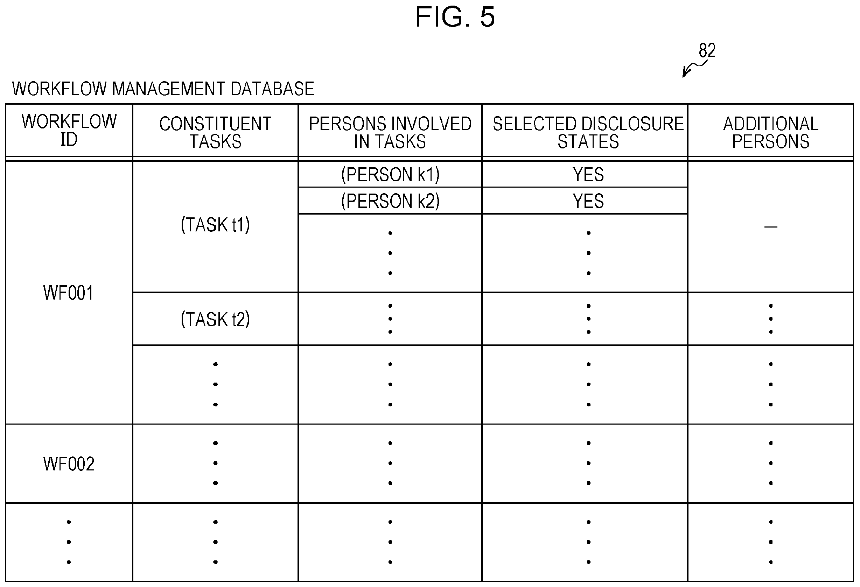

Next, the workflow management database 82A according to the present exemplary embodiment will be described with reference to Fig. 5. Fig. 5 is schematic diagram illustrating an example of the configuration of the workflow management database 82A according to the present exemplary embodiment.

The workflow management database 82A according to the present exemplary embodiment is a database in which information regarding workflows is registered. As illustrated in Fig. 5, for example, workflow identifiers (IDs), constituent tasks, persons involved in the tasks, selected disclosure states, and additional persons who can refer to workflow-related information are stored while being associated with one another.

The workflow IDs are unique information given in advance to corresponding workflows in order to individually identify the workflows. The constituent tasks are information indicating tasks included in corresponding workflows. When a workflow for applying for settlement for a target is used, for example, constituent tasks are creation of a settlement application, approval by a person in charge of drafting, comparison and forwarding of an estimate, and approval by a person in charge of settlement in chronological order.

The persons involved in the tasks are information indicating the persons involved in the corresponding tasks. The selected disclosure states are information indicating whether to disclose workflow-related information relating to the corresponding tasks to the persons involved in the tasks, and correspond to the above-described disclosure information. The additional persons are information indicating persons, other than the persons involved in the tasks, who can refer to the workflow-related information relating to the corresponding tasks.

In the example illustrated in Fig. 5, information ("Yes" in the example illustrated in Fig. 5) indicating that workflow-related information is to be disclosed to all persons registered is stored as default information regarding a selected disclosure state. In addition, in the example illustrated in Fig. 5, information ("- (hyphen)" in the example illustrated in Fig. 5) indicating that there are no additional persons who can refer to the workflow-related information is stored as default information regarding the additional persons.

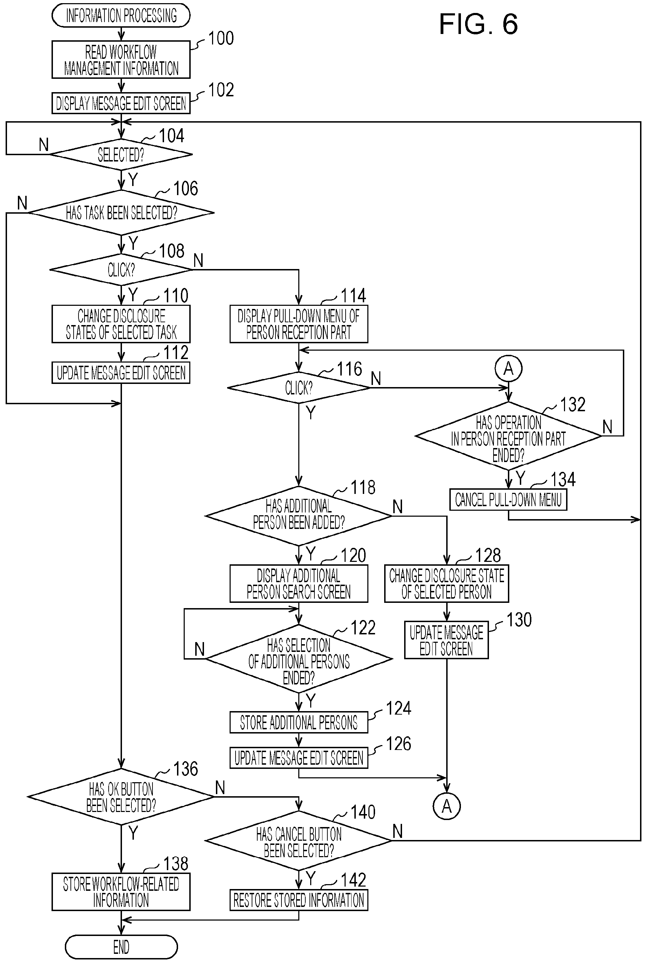

Next, operations at a time when the terminal apparatuses 10, which play a central role in the information processing system 1, perform information processing will be described as operations of the information processing system 1 according to the present exemplary embodiment. Fig. 6 is a flowchart illustrating an example of the information processing according to the present exemplary embodiment.

In the information processing system 1 according to the present exemplary embodiment, each of tasks included in a workflow to be processed is performed by at least one performer, who is at least one of persons involved in the task. When a performer sets workflow-related information for persons who will perform subsequent tasks while associating the workflow-related information with the corresponding tasks, the performer inputs, using the input unit 14, an instruction to start the information processing. The information processing is performed when the performer has input the instruction and the CPU 11 of the terminal apparatus 10 has executed the information processing program 13A. Here, a case where a workflow ID of a workflow to be processed (hereinafter referred to as a "target workflow") is set in advance will be described in order to avoid complexity. In addition, here, a case where the workflow management database 82A has already been constructed as in Fig. 5 will be described in order to avoid complexity.

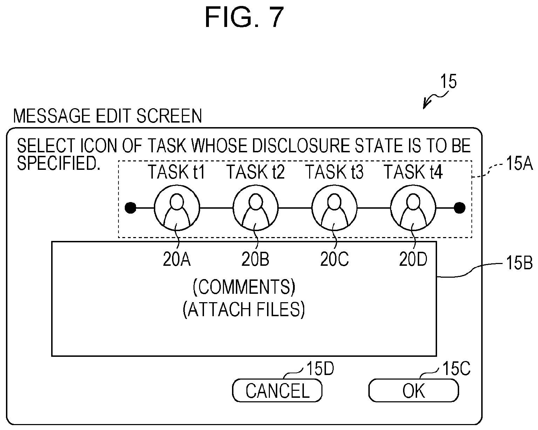

In step 100 in Fig. 6, the CPU 11 reads, from the workflow management database 82A, information (hereinafter referred to as "workflow management information") regarding constituent tasks and persons involved in the tasks corresponding to the target workflow. In step 102, the CPU 11 controls, using the read workflow management information, the display unit 15 such that the display unit 15 displays a message edit screen having a predetermined configuration. In step 104, the CPU 11 waits until predetermined information is selected. Fig. 7 illustrates the message edit screen according to the present exemplary embodiment.

As illustrated in Fig. 7, the message edit screen according to the present exemplary embodiment includes a message for prompting a performer to select an icon of a task for which a disclosure state of the workflow-related information set by the performer is to be specified. The message edit screen according to the present exemplary embodiment also includes a process reception part 15A, where individual icons 20A, 20B, and so on indicating the tasks included in the target workflow are displayed in order of execution of the corresponding tasks. The process reception part 15A corresponds to the process reception screen. The icons 20A, 20B, and so on will be simply referred to as "icons 20" when not distinguished from one another.

Although abstract human images are used as images of the icons 20 in the present exemplary embodiment, the images of the icons 20 are not limited to this. For example, images of persons who are to perform the corresponding tasks, images of departments that are to perform the corresponding tasks, or the like may be used as the images of the icons 20, instead. Alternatively, text images indicating the persons, the departments, or the like in text may be used as the images of the icons 20.

As described above, in the information processing program 13A according to the present exemplary embodiment, display modes of the icons 20 displayed in the process reception part 15A change in accordance with disclosure states of the workflow-related information set for the corresponding tasks. When information stored in the workflow management database 82A as the selected disclosure states is in a default state as illustrated in Fig. 5, "Yes" is registered as the selected disclosure states for all the tasks and all the persons involved in the tasks. In this case, therefore, all the icons 20 are displayed in a default state as illustrated in Fig. 7.

The message edit screen according to the present exemplary embodiment also includes a message setting area 15B for inputting comments indicating the workflow-related information and attaching electronic files relating to the workflow-related information.

After the message edit screen illustrated in Fig. 7 is displayed on the display unit 15, the performer sets, using the input unit 14, the workflow-related information (execution information and message information in the present exemplary embodiment) in the display unit 15. If the performer desires to change a disclosure state of the set workflow-related information, the performer selects the icon 20 of the target task using the input unit 14. If the performer does not change the disclosure state of the workflow-related information or has finished changing the disclosure state, the performer selects an OK button 15C using the input unit 14. If the performer desires to cancel the input workflow-related information, the performer selects a cancel button 15D using the input unit 14.

The icons 20 can be selected by the mouse-over operation or the mouse-click operation. These two selection methods are available in the information processing according to the present exemplary embodiment.

If the performer selects one of the icons 20, the OK button 15C, or the cancel button 15D, a result of step 104 becomes positive, and the information processing proceeds to step 106.

In step 106, the CPU 11 determines whether the performer has selected one of the icons 20 in the process reception part 15A, that is, one of the tasks included in the target workflow. If a result of step 106 is negative, the CPU 11 causes the information processing to proceed to step 136. If the result of step 106 is positive, the CPU 11 causes the information processing to proceed to step 108.

In step 108, the CPU 11 determines whether the task has been selected through a mouse-click operation. If a result of step 108 is positive, the information processing proceeds to step 110.

In step 110, the CPU 11 collectively changes selected disclosure states, for all persons involved in the task selected by the performer, of the task through the mouse-click operation to "Yes", which indicates that the corresponding workflow-related information is to be disclosed, or "No", which indicates that the corresponding workflow-related information is not to be disclosed. In the present exemplary embodiment, if the selected disclosure states of the task for all the persons involved in the task have been "Yes", the selected disclosure states are changed to "No". If the selected disclosure states of the task for all the persons involved in the task have been "No", the selected disclosure states are changed to "Yes". In addition, in the present exemplary embodiment, if the selected disclosure states of the task for the persons involved in the task include both "Yes" and "No", the selected disclosure states are changed to the opposite of a majority. That is, in the information processing according to the present exemplary embodiment, whether to disclose workflow-related information to all persons involved in a corresponding task can be collectively changed through a mouse-click operation performed on one of icons 20 in the process reception part 15A.

In step 112, the CPU 11 updates a display mode of the process reception part 15A of the message edit screen displayed on the display unit 15 in accordance with the change to the selected disclosure states as a result of step 110. The information processing then proceeds to step 136.

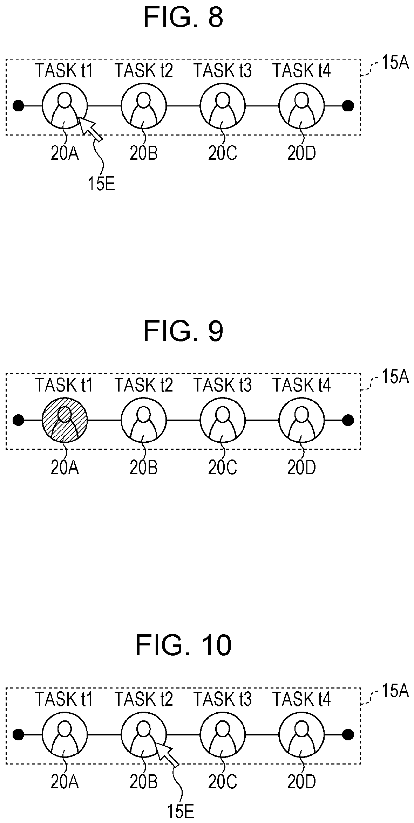

Figs. 8 and 9 illustrate examples of the display mode of the process reception part 15A of the message edit screen according to the present exemplary embodiment. As illustrated in Fig. 8, if the performer performs a mouse-click operation with a mouse pointer 15E on the icon 20A, the process reception part 15A is updated in step 112, and a display mode of the icon 20A subjected to the mouse-click operation is updated in the process reception part 15A as illustrated in Fig. 9. Fig. 9 illustrates an example where the display mode of the icon 20A has been changed to one indicating workflow-related information is not to be disclosed to all persons involved in a corresponding task.

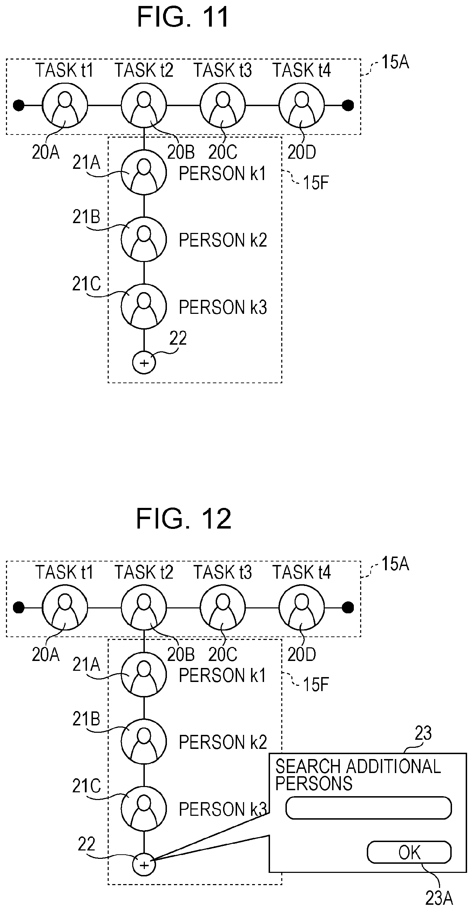

If the result of step 108 is negative, on the other hand, it is determined that the task has been selected through a mouse-over operation, and the information processing proceeds to step 114. In step 114, the CPU 11 displays a pull-down menu of a person reception part 15F (refer to Fig. 11) having a predetermined configuration for the task selected by the performer through the mouse-over operation. The person reception part 15F corresponds to the person reception screen.

Fig. 10 illustrates another example of the display mode of the process reception part 15A according to the present exemplary embodiment, and Fig. 11 illustrates an example of display modes of the process reception part 15A and the person reception part 15F according to the present exemplary embodiment. As illustrated in Fig. 10, if the performer performs a mouse-over operation on the icon 20B, the person reception part 15F is displayed as a pull-down menu in step 114 as illustrated in Fig. 11.

As illustrated in Fig. 11, in the person reception part 15F according to the present exemplary embodiment, individual icons 21A, 21B, and so on indicating persons involved in a task selected through a mouse-over operation are displayed in a direction intersecting with (perpendicular to, in the present exemplary embodiment) a direction in which the icons 21A, 21B, and so on are arranged in the process reception part 15A. At this time, the icons 21A, 21B, and so on are displayed in modes according to corresponding selected disclosure states (in the present embodiment, the top icon in Fig. 4 is used when workflow-related information is to be disclosed, and the second icon in Fig. 4 is used when workflow-related information is not to be disclosed). The icons 21A, 21b, and so on will be simply referred to as "icons 21" hereinafter when not distinguished from one another.

As illustrated in Fig. 11, the person reception part 15F according to the present exemplary embodiment also includes, at an end of the icons 21 therein opposite the process reception part 15A, an additional person setting button 22 for setting the above-described additional persons who can refer to workflow-related information.

If the performer desires to change a selected disclosure state for a person corresponding to one of the displayed icons 21 after the display unit 15 displays the person reception part 15F, the performer performs a mouse-click operation on the icon 21.

If the performer desires to set additional persons who can refer to workflow-related information relating to a task corresponding to the displayed person reception part 15F, the performer performs a mouse-click operation on the additional person setting button 22. In the present exemplary embodiment, when the person reception part 15F is displayed and the performer is performing any operation in the person reception part 15F, the performer keeps the mouse pointer 15E within the person reception part 15F. When the operation performed in the person reception part 15F ends, the performer moves the mouse pointer 15E out of the person reception part 15F.

In step 116, the CPU 11 determines whether the performer has performed a mouse-click operation within the person reception part 15F. If a result of step 116 is positive, the information processing proceeds to step 118. In step 118, the CPU 11 determines whether a mouse-click operation has been performed on the additional person setting button 22. If a result of step 118 is positive, the information processing proceeds to step 120.

In step 120, the CPU 11 controls the display unit 15 such that the display unit 15 displays an additional person search screen having a predetermined configuration. Fig. 12 illustrates an example of a display mode of an additional person search screen 23 according to the present exemplary embodiment.

As illustrated in Fig. 12, the additional person search screen 23 according to the present exemplary embodiment appears from the additional person setting button 22 as a pop-up window to enable the performer to search for additional persons. After the additional person search screen 23 is displayed on the display unit 15, the performer selects additional persons and then selects an OK button 23A.

In step 122, therefore, the CPU 11 waits until all the additional persons are selected by waiting until the performer selects the OK button 23A. In step 124, the CPU 11 stores the additional persons selected by the performer in a corresponding storage area of the workflow management database 82A.

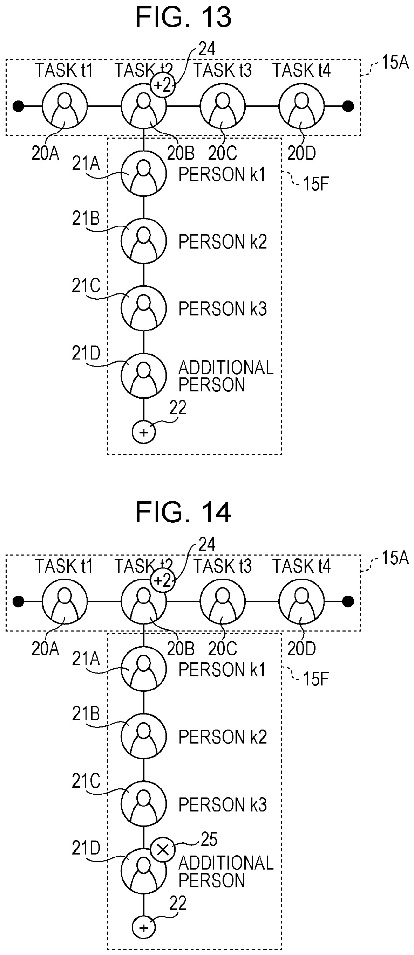

In step 126, the CPU 11 updates the display modes of the process reception part 15A and the person reception part 15F of the message edit screen in the display unit 15 in accordance with the additional persons selected in the above-described processing. The information processing then proceeds to step 132. Fig. 13 illustrates another example of the display modes of the process reception part 15A and the person reception part 15F of the message edit screen according to the present exemplary embodiment.

As illustrated in Fig. 13, the CPU 11 additionally displays an icon 21D, which indicates an additional person, between the end of the icons 21 in the person reception part 15F opposite the process reception part 15A and the additional person setting button 22 as a result of step 126. At this time, the CPU 11 displays a badge 24 indicating the number of additional persons selected by the performer on an icon 20 of a corresponding task (the icon 20B in the example illustrated in Fig. 13). As illustrated in Fig. 14 as an example, the CPU 11 may also display a removal button 25 on the added icon 21D to enable the performer to remove the selected additional person.

If the result of step 118 is negative, on the other hand, the CPU 11 determines that a mouse-click operation has been performed on one of the icons 21 in the person reception part 15F. The information processing then proceeds to step 128.

In step 128, the CPU 11 changes a selected disclosure state of a person corresponding to the icon 21 subjected to the mouse-click operation to an opposite state. If the selected disclosure state has been "Yes", for example, the CPU 11 changes the information to "No". If the selected disclosure state has been "No", for example, the CPU 11 changes the information to "Yes". That is, in the information processing according to the present exemplary embodiment, whether to disclose workflow-related information to a person involved in a corresponding task can be changed by performing a mouse-click operation on a corresponding one of icons 21 in the person reception part 15F.

In step 130, the CPU 11 updates the display mode of the message edit screen displayed on the display unit 15 in accordance with the change to the selected disclosure state as a result of step 128. The information processing then proceeds to step 132.

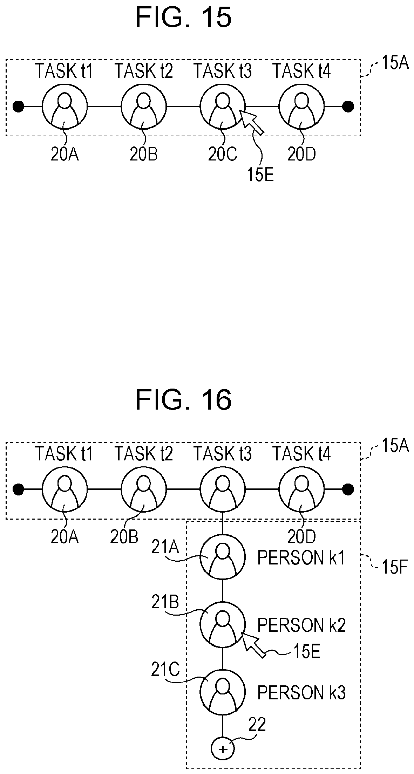

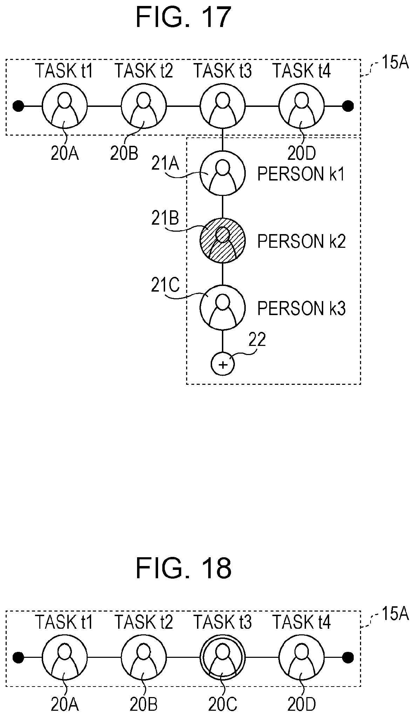

Figs. 15 and 18 illustrate other examples of the display mode of the process reception part 15A according to the present exemplary embodiment. Figs. 16 and 17 illustrate other examples of the display modes of the process reception part 15A and the person reception part 15F according to the present exemplary embodiment.

A case will be described, as an example, where the performer has performed a mouse-click operation on the icon 20C as illustrated in Fig. 15 and then performed another mouse-click operation on the icon 21B as illustrated in Fig. 16. In this case, as illustrated in Fig. 17, a display mode of the icon 21B subjected to the mouse-click operation is updated in the person reception part 15F of the message edit screen as the person reception part 15F is updated as a result of step 130. Fig. 17 illustrates an example of a case where the display mode of the icon 21B has been updated to one indicating that workflow-related information is not to be disclosed to a corresponding person.

As illustrated in Fig. 18, a display mode of the icon 20C in the process reception part 15A of the message edit screen indicating a corresponding task is updated, as the process reception part 15A is updated as a result of step 130, to one indicating that the workflow-related information is to be displayed to part of persons involved in the task.

If the result of step 116 is negative, on the other hand, it is determined that a mouse-click operation has not been performed in the person reception part 15F displayed as a pull-down menu. The information processing then proceeds to step 132.

In step 132, the CPU 11 determines whether the performer has finished performing an operation in the person reception part 15F by determining whether the mouse pointer 15E has moved out of the person reception part 15F. If a result of step 132 is negative, the information processing returns to step 116. If the result of step 132 is positive, the information processing proceeds to step 134, and the CPU 11 cancels (removes) the pull-down menu of the person reception part 15F. The information processing then returns to step 104.

In step 136, the CPU 11 determines whether the performer has selected the OK button 15C. If a result of step 136 is positive, the information processing proceeds to step 138, and the CPU 11 stores the set workflow-related information in the storage unit 82 of the server 80 and ends the information processing. If the result of step 136 is negative, the information processing proceeds to step 140.

In step 140, the CPU 11 determines whether the performer has selected the cancel button 15D. If a result of step 140 is negative, the information processing returns to step 104. If the result of step 140 is positive, the information processing proceeds to step 142.

In step 142, the CPU 11 restores the information updated as a result of the above information processing to a state before the information processing starts, and then ends the information processing.

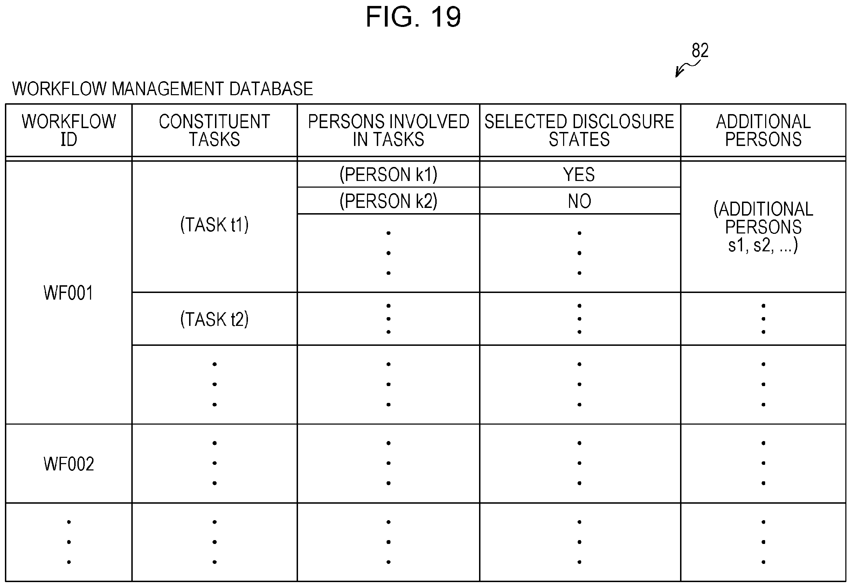

As a result of the above information processing, selected disclosure states and additional persons are updated, as illustrated in Fig. 19 as an example, in the workflow management database 82A in accordance with how the performer has selected disclosure states and additional persons.

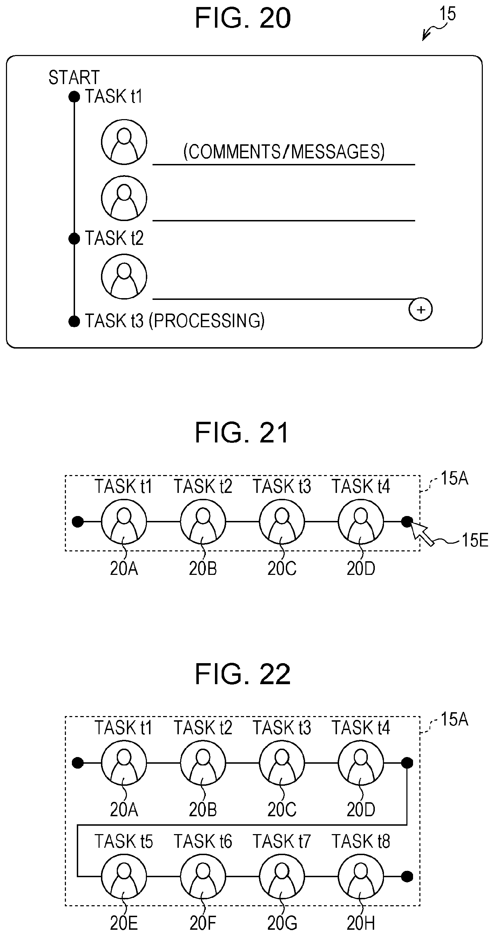

Whether to display workflow-related information relating to tasks, therefore, can be changed, as illustrated in Fig. 20 as an example, using the information registered in the workflow management database 82A. Fig. 20 is a diagram illustrating an example of a display mode of workflow-related information according to the present exemplary embodiment.

Although icons are displayed in a line in the process reception part 15A and the person reception part 15F in the above exemplary embodiment, how the icons are displayed is not limited to this. When the number of tasks included in a workflow or the number of persons involved in each of the tasks is so large that it is difficult to display icons in a line, for example, the icons may be displayed in a plurality of lines, instead.

Figs. 21 and 22 illustrate examples of a display mode of a process reception part 15A according to a modification of the exemplary embodiment at a time when the above mode is applied to the process reception part 15A.

In this case, as illustrated in Fig. 21, only a displayable number of icons 20 are displayed in order of execution, and when an end of the icons 20 is selected using the mouse pointer 15E, remaining icons 20 may be displayed in a next row as illustrated in Fig. 22. In this mode, the end of the icons 20 may be an arrow indicating a direction of arrangement of the icons 20, instead of a black dot as in Fig. 21, in order to make the performer understand that there are subsequent tasks.

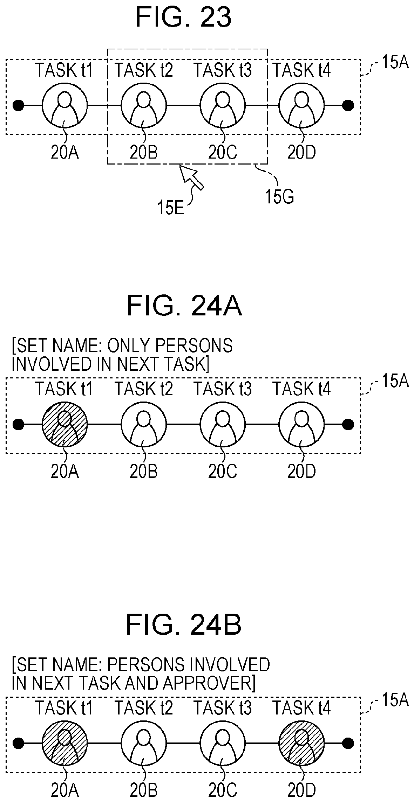

Although a case where tasks are selected one by one and persons involved in the tasks are selected one by one has been described in the above exemplary embodiment, how the tasks and the persons are selected is not limited to this. For example, as illustrated in Fig. 23, a plurality of tasks and persons may be selected at once by setting a rectangular frame 15G surrounding the plurality of icons using the mouse pointer 15E.

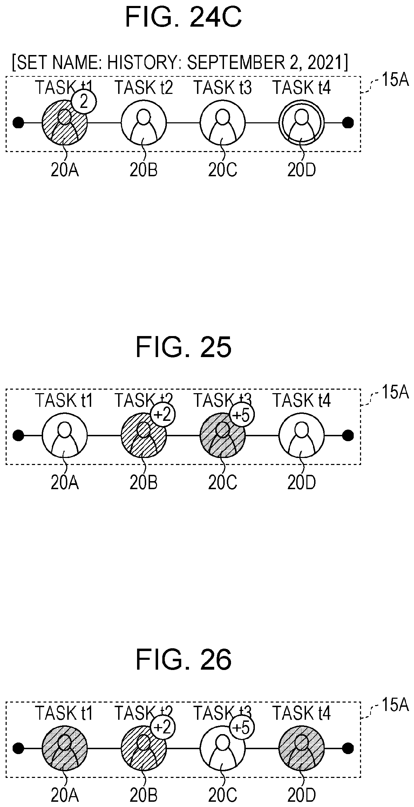

In addition, although a case where tasks and persons involved in the tasks are selected for each workflow has been described in the above exemplary embodiment, how the tasks and the persons are selected are not limited to this. For example, as illustrated in Figs. 24A to 24C, selection of disclosure states of workflow-related information may be stored as patterns, and selection of disclosure states of other workflows may be simplified by selecting and applying one of the patterns, instead. Fig. 24A illustrates a pattern in which workflow-related information is to be disclosed to only a person involved in a next task. Fig. 24B illustrates a pattern in which workflow-related information is to be disclosed to a person involved in a next task and an approver. Fig. 24C illustrates a pattern indicating selection of disclosure states of workflow-related information used in a past workflow.

Although a case where tasks and persons involved in the tasks are selected using the mouse has been described in the above exemplary embodiment, how the tasks and the persons are selected is not limited to this. For example, the tasks and the persons may be selected using a touch panel, instead of the mouse. In this case, for example, a mode in which a press and hold on the touch panel at a corresponding position is regarded as a mouse-over operation and a press on the touch panel at a corresponding position is regarded as a mouse-click operation or an opposite mode may be employed.

In addition, although a case where a person who has input workflow-related information sets whether to disclose the workflow-related information has been described in the above exemplary embodiment, a person who sets whether to disclose workflow-related information is not limited to this. For example, a person who manages a workflow may set whether to disclose corresponding workflow-related information, instead. An example of a mode employed in this case may be a mode in which the server 80 performs the information processing illustrated in Fig. 6.

In addition, although a case where a display mode of icons remains the same regardless of how widely workflow-related information is to be disclosed has been described in the above exemplary embodiment, the display mode of icons is not limited to this. For example, icons may be highlighted more strongly as corresponding workflow-related information is to be disclosed more widely, instead. Conversely, icons may be highlighted more strongly as corresponding workflow-related information becomes more private.

Fig. 25 illustrates an example of the mode in which icons are highlighted more strongly as corresponding workflow-related information is to be disclosed more widely. Fig. 26 illustrates an example of the mode in which icons are highlighted more strongly as corresponding workflow-related information becomes more private. Although different densities are used to highlight icons in the examples illustrated in Figs. 25 and 26, how icons are highlighted is not limited to this. For example, different colors, sizes, or outline shapes may be used to highlight icons, instead.

In addition, although a case where the workflow management database 82A is registered in the server 80 has been described in the above exemplary embodiment, the workflow management database 82A need not be registered in the server 80. For example, the workflow management database 82A may be registered in one of the terminal apparatuses 10 or an apparatus other than the server 80 accessible from the terminal apparatuses 10, instead.

Although an exemplary embodiment has been described above, the technical scope of the present disclosure is not limited to the exemplary embodiment. The exemplary embodiment may be modified or improved in various ways without deviating from the scope of the present disclosure, and the technical scope of the present disclosure also includes such modifications or improvements.

In addition, the above exemplary embodiment is not intended to limit the claims, and not every combination of the features described in the exemplary embodiment is necessary for the techniques proposed in the present disclosure. The above-described exemplary embodiment includes ideas at various stages, and various ideas are extracted on the basis of combinations of a plurality of disclosed elements. Even if some elements are removed from all the elements described in the exemplary embodiment, a configuration without the removed elements can be extracted as an idea, insofar as an effect is produced.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

Furthermore, although a case where the information processing is achieved by a software configuration by executing a program using a computer has been described in the above exemplary embodiment, the present disclosure is not limited to this. For example, the information processing may be achieved by a hardware configuration or a combination of a hardware configuration and a software configuration, instead.

The configuration of the terminal apparatuses 10 described in the above exemplary embodiment is an example, and it is needless to say that unnecessary parts may be removed or new parts may be added without deviating from the spirit of the present disclosure.

In addition, the procedure of each of the processes described in the above exemplary embodiment, too, is an example, and unnecessary steps may be removed, new steps may be added, or order of processing may be switched without deviating from the spirit of the present disclosure

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

## Claims

1. An information processing apparatus comprising:
a processor configured to:
display a process reception screen in which a plurality of processes included in a workflow are displayed in order of execution and that receives selection of at least one of the plurality of displayed processes;
receive, for the at least one process received by the process reception screen, disclosure information indicating whether to disclose workflow-related information relating to the workflow; and
set whether to disclose the workflow-related information in accordance with the received disclosure information.

2. The information processing apparatus according to Claim 1,
wherein the processor is configured to display, after the process reception screen receives the at least one process, a person reception screen in which at least one person involved in the at least one received process is displayed and that receives at least one of the displayed at least one person, and
wherein the processor is configured to receive the disclosure information for the at least one person received by the person reception screen.

3. The information processing apparatus according to Claim 1 or 2,
wherein the workflow-related information includes at least one of information indicating what to be executed in the workflow and information indicating a message relating to the plurality of processes included in the workflow.

4. The information processing apparatus according to any one of Claims 1 to 3,
wherein the processor is configured to display, in the process reception screen, icons individually indicating the plurality of processes in order of execution of the corresponding processes.

5. The information processing apparatus according to Claim 4,
wherein the processor is configured to display the icons in different modes in accordance with whether to disclose the workflow-related information.

6. The information processing apparatus according to Claim 5,
wherein the processor is configured to display the icons in different modes in accordance with whether the workflow-related information is to be disclosed to all persons involved, not to be disclosed to any of the persons involved, to be disclosed to part of the persons involved, or to be also disclosed to additional persons.

7. The information processing apparatus according to Claim 6,
wherein the processor is configured to highlight the icons more strongly as the workflow-related information is to be disclosed more widely.

8. The information processing apparatus according to any one of Claims 1 to 7,
wherein the processor is configured to assume, if a position on a display screen at which a predetermined first operation has been performed is detected, that a display target at the position at which the first operation has been performed on the display screen has been selected, and
wherein the processor is configured to assume, if a position at which a second operation, which is different from the first operation, has been performed is detected, that the disclosure information regarding a display target at the position at which the second operation has been performed on the display screen has been selected.

9. The information processing apparatus according to Claim 2,
wherein the processor is configured to display, in a case where the plurality of processes are displayed in the process reception screen in a line and there are a plurality of persons involved in the at least one received process, the plurality of persons in the person reception screen in a direction intersecting with a direction in which the plurality of processes are arranged in the process reception screen.

10. The information processing apparatus according to any one of Claims 1 to 9,
wherein the processor is configured to receive selection of an additional person to whom the workflow-related information is to be disclosed.

11. The information processing apparatus according to Claim 10,
wherein the processor is configured to display, if the additional person is received and each of the plurality of processes is displayed as an individual icon, a number of additional persons received on one of the icons indicating a corresponding one of the plurality of processes.

12. A program causing a computer to execute a process for processing information, the process comprising:
displaying a process reception screen in which a plurality of processes included in a workflow are displayed in order of execution and that receives selection of at least one of the plurality of displayed processes;
receiving, for the at least one process received by the process reception screen, disclosure information indicating whether to disclose workflow-related information relating to the workflow; and
setting whether to disclose the workflow-related information in accordance with the received disclosure information.

13. A method for processing information, the method comprising:
displaying a process reception screen in which a plurality of processes included in a workflow are displayed in order of execution and that receives selection of at least one of the plurality of displayed processes;
receiving, for the at least one process received by the process reception screen, disclosure information indicating whether to disclose workflow-related information relating to the workflow; and
setting whether to disclose the workflow-related information in accordance with the received disclosure information.
